# EUROPÄISCHE PATENTSCHRIFT

(11) **EP 1 982 579 B1**
(45) Veröffentlichungstag und Bekanntmachung des Hinweises auf die Patenterteilung: **21.11.2012**
(21) Anmeldenummer: 08007206.9
(22) Anmeldetag: 11.04.2008
(51) Int. Cl.: A01G 17/14

(54) **Endpfahl**
Terminal post
Piquet de tête

(30) Priorität: 20.04.2007 DE 202007008245 U
(43) Veröffentlichungstag der Anmeldung: 22.10.2008
(73) Patentinhaber: Meiser, Wolfgang, 66636 Tholey (DE); Weinheimer, Dieter, 55234 Bechtolsheim (DE); Flick, Ulrich, 55234 Bechtolsheim (DE)
(72) Erfinder: Meiser, Wolfgang, 66636 Tholey (DE); Weinheimer, Dieter, 55234 Bechtolsheim (DE); Flick, Ulrich, 55234 Bechtolsheim (DE)
(74) Vertreter: Vièl, Christof

(56) Entgegenhaltungen:
- EP-A1- 0 876 757
- EP-A1- 1 153 541
- FR-A1- 2 601 846
- FR-A1- 2 617 370
- ARTOS: "WEINBERGPFAHLSYSTEME:Intelligent und Effizient" PRODUCT KATALOG, [Online] 2003, XP002522791 Gefunden im Internet: URL:http://www.artos-weinbergpfahl.de/de/p df/Produktkatalog_deutsch_LR.pdf> [gefunden am 2009-04-06]

## Beschreibung

Die Erfindung betrifft einen Endpfahl für den Wein- und Obstbau, bestehend aus einem Metallprofil mit in etwa U-förmigem Querschnitt, durch das sich mehrere Stäbe erstrecken, deren sich über das Metallprofil hinaus erstreckende freie Enden jeweils zu Haken umgebogen sind.

Derartige Endpfähle werden an den äußeren Enden von Drahtrahmen oder Palisaden für Pflanzungen (Wein-, Obst- und Beerenbau) angeordnet, die aus in den Boden getriebenen Pfählen bestehen, an denen Drähte oder Gittervorrichtungen in bestimmter Bodenhöhe angebracht werden können. Die Haken der Endpfähle dienen als Drahtaufhängungen.

Aus der DE 601 00 769 T2 und aus der EP-A-1153541 ist eine Palisade für Umzäunungen und Pflanzungen mit Endpfählen am äußersten Ende der Reihen der Palisade bekannt. Die dort beschriebenen Endpfähle sind mit Strebepfeilern versehen, T-förmigen Pfeilern, die am oberen Ende der Endpfähle befestigt und am unteren Ende mit einem Betonklotz in den Boden eingegraben werden.

Ein Endpfahl gemäß dem Oberbegriff ist beispielsweise als "artos Endpfahl" aus dem Prospekt "artos Weinbergpfahlsysteme - Intelligent und Effizient" der artos Vertriebsgesellschaft, Vor dem Schloß 27, 55234 Bechtolsheim bekannt. Er weist acht festverschweißte Rundstäbe auf, die sich durch den in etwa U-förmigen Querschnitt erstrecken und deren freie, zu Haken umgebogene Enden sich über die lichte Breite des Endpfahls hinaus erstrecken. Diese Rundstäbe verleihen dem Endpfahl eine sehr hohe Stabilität und Verwindungssteifigkeit und dienen gleichzeitig als sehr einfach zu benutzende und stabile Drahtaufhängungen. Im unteren Bereich des Endpfahls sind zur Verstärkung Querstäbe eingeschweißt, die dem Pfahl auch im Boden eine hohe Stabilität verleihen. Zudem ermöglichen die Querstäbe ein problemloses Anbringen der Absenkplatte, so daß weiteres Zubehör zur Drahtanbringung nicht erforderlich ist.

Dieser Endpfahl hat sich aufgrund seiner Stabilität und langen Lebensdauer bewährt.

Aufgabe der Erfindung ist es, den Endpfahl gemäß dem Oberbegriff weiter zu verbessern.

Diese Aufgabe wird erfindungsgemäß dadurch gelöst, daß die Haken sich nicht über die Breite des Metallprofils senkrecht zur Zugrichtung hinaus erstrecken.

Dies ist insofern vorteilhaft, als eine deutlich geringere Verletzungsgefahr für den Benutzer besteht und die Gefahr von Beschädigungen an den Einsatzmaschinen (Traktor, Traubenvollernter, etc.) im Weinberg oder Obstgarten deutlich reduziert wird. Bei den Endpfählen gemäß dem Stand der Technik ragen hingegen die Haken nämlich senkrecht zur Zugrichtung über das Metallprofil hinaus, was sowohl für die im Weinberg oder Obstgarten beschäftigten Personen als auch für die eingesetzten Maschinen eine Gefahrenquelle darstellt. Der Zug der Pflanzenreihe erfolgt auf der geschlossenen Seite des Metallprofils.

Im Rahmen der Erfindung ist vorgesehen, daß die Haken an der offenen Seite des Metallprofils angeordnet sind.

In diesem Zusammenhang hat es sich als vorteilhaft erwiesen, daß die Haken nicht im Bereich der maximalen Breitenerstreckung des Metallprofils angeordnet sind.

Weiterhin ist es zur Erfindung gehörig, daß die Haken zu der offenen Seite des Metallprofils hin gebogen sind.

Bei dem zur Bildung des Oberbegriffes herangezogenen Stand der Technik sind hingegen die Haken zur geschlossenen Seite des Metallprofils hin gebogen.

Erfindungsgemäß ist weiterhin vorgesehen, daß die freien Enden der Stäbe um 80 bis 100° zu Haken umgebogen sind, vorzugsweise um 90°.

Bei dem zur Bildung des Oberbegriffs herangezogenen Stand der Technik sind die freien Enden der Stäbe nur um ca. 45° zu Haken gebogen, was die Gefahr eines Lösens bei nicht maximal gespannten Drähten mit sich bringt. Die erfindungsgemäße Form der Haken ermöglicht ein leichtes Einhängen und Spannen der Drähte und der Weinbergketten. Ein manuelles Anbringen von Halterungen für den Draht ist aufgrund der an dem Endpfahl vorgesehenen Haken nicht erforderlich.

Es ist vorteilhaft, daß die Stäbe mit dem Metallprofil durch eine Schweißverbindung verbunden sind.

Dies erhöht zum einen die Stabilität des gesamten Endpfahls erheblich und sichert zum anderen dauerhaft die Stäbe gegen ein Verschieben.

Weiterhin liegt im Rahmen der Erfindung, daß die Stäbe Rundstäbe sind.

Schließlich besteht eine Weiterbildung der Erfindung darin, daß im unteren Bereich des Endpfahls Querstäbe eingeschweißt sind.

Dies bringt die bereits oben geschilderten Vorteile einer weiteren Erhöhung der Stabilität der Endpfähle und einer Befestigungsmöglichkeit für die Absenkplatte.

Nachfolgend wird ein Ausführungsbeispiel der Erfindung anhand von Zeichnungen erläutert.

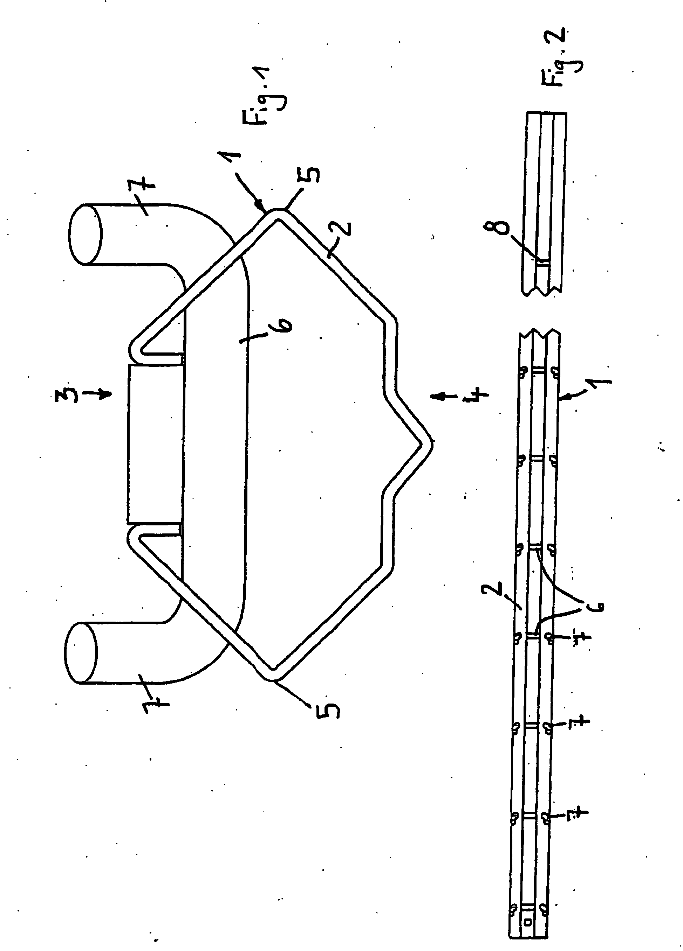

Es zeigen
Fig. 1 einen erfindungsgemäßen Endpfahl in geschnittener Darstellung,
Fig. 2 eine Ansicht der offenen Seite eines erfindungsgemäßen Endpfahls.
   Wie aus Fig. 1 ersichtlich, besteht der Endpfahl 1 aus einem Metallprofil 2 mit in etwa U-tiirmigem Querschnitt, bei dem somit eine offene Seite 3 einer geschlossenen Seite 4 gegenüberliegt. Die beiden freien Schenkel des U-förmigen Querschnitts sind zur Versteifung des Metallprofils 2 V-rormig nach außen ausgebaucht, so daß das Metallprofil 2 im Bereich der sich gegenüberliegenden V-förmigen Ausbauchungen 5 seine maximale Breite aufweist. Der Zug der Pflanzenreihe greift an der geschlossenen Seite 4 des Metallprofils 2 an.
   Durch das Metallprofil 2 erstrecken sich mehrere (hier: acht) Rundstäbe 6, die mit dem Metallprofil 2 verschweißt sind und deren sich über das Metallprofil 2 hinaus erstreckende freie Enden jeweils um 90° zu Haken 7 umgebogen sind. Aus Fig. 1 ist zu entnehmen, daß die Haken 7 sich senkrecht zur Zugrichtung nicht über die maximale Breite des Metallprofils 2 hinaus erstrecken.
   Fig. 1 kann auch entnommen werden, daß die Haken 7 an der offenen Seite des Metallprofils 2 angeordnet und zu der offenen Seite des Metallprofils 2 hin gebogen sind.
   Zur weiteren Versteifung sind im unteren Bereich des Endpfahls Querstäbe 8 eingeschweißt.

## Patentansprüche

1. Endpfahl (1) für den Wein- und Obstbau, bestehend aus einem Metallprofil (2) mit in etwa U-förmigem Querschnitt, durch das sich mehrere Stäbe (6) erstrecken, deren sich über das Metallprofil (2) hinaus erstreckende freie Enden jeweils zu Haken (7) umgebogen sind, **dadurch gekennzeichnet, daß** die Haken (7) sich nicht über die Breite des Metallprofils (2) senkrecht zur Zugrichtung hinaus erstrecken.

2. Endpfahl (1) gemäß Anspruch 1, **dadurch gekennzeichnet, daß** die Haken (7) an der offenen Seite (3) des Metallprofils (2) angeordnet sind.

3. Endpfahl (1) gemäß Anspruch 1, **dadurch gekennzeichnet, daß** die Haken (7) zu der offenen Seite (3) des Metallprofils (2) hin gebogen sind.

4. Endpfahl (1) gemäß Anspruch 1, **dadurch gekennzeichnet, daß** die freien Enden der Stäbe (6) um 80 bis 100° zu Haken (7) (6) umgebogen sind, vorzugsweise um 90°.

5. Endpfahl (1) gemäß Anspruch 1, **dadurch gekennzeichnet, daß** die Stäbe mit dem Metallprofil (2) durch eine Schweißverbindung verbunden sind.

6. Endpfahl (1) gemäß Anspruch 1, **dadurch gekennzeichnet, daß** die Stäbe (6) Rundstäbe sind.

7. Endpfahl (1) gemäß Anspruch 1, **dadurch gekennzeichnet, daß** im unteren Bereich des Endpfahls Querstäbe (8) eingeschweißt sind.

## Claims

1. End stake (1) for wine- and fruit-growing, consisting of a metal profile (2) with an approximately U-shaped cross section, through which a plurality of rods (6) extend whose free ends, which extend beyond the metal profile (2), are each bent to form a hook (7), **characterised in that**, in the direction perpendicular to the direction of pull, the hooks (7) do not extend beyond the width of the metal profile (2).

2. End stake (1) according to claim 1, **characterised in that** the hooks (7) are located at the open side (3) of the metal profile (2).

3. End stake (1) according to claim 1, **characterised in that** the hooks (7) are bent towards the open side (3) of the metal profile (2).

4. End stake (1) according to claim 1, **characterised in that** the free ends of the rods (6) are bent by 80 to 100°, preferably by 90°, to form hooks (7) (6).

5. End stake (1) according to claim 1, **characterised in that** the rods are joined to the metal profile (2) by means of a welded joint.

6. End stake (1) according to claim 1, **characterised in that** the rods (6) are round rods.

7. End stake (1) according to claim 1, **characterised in that** transverse rods (8) are welded into the lower portion of the end stake.

## Revendications

1. Piquet de tête (1) pour la viticulture et la fruiticulture, composé d'un profil métallique (2) ayant une section sensiblement en U au travers duquel s'étendent plusieurs tiges (6) dont les extrémités libres qui s'étendent au-delà du profil métallique (2) sont cintrées chacune en formant un crochet (7), **caractérisé en ce que** les crochets (7) s'étendent sans dépasser la largeur du profil métallique (2) perpendiculairement à la direction de traction.

2. Piquet de tête (1) selon la revendication 1, **caractérisé en ce que** les crochets (7) sont disposés sur la face ouverte (3) du profil métallique (2).

3. Piquet de tête (1) selon la revendication 1, **caractérisé en ce que** les crochets (7) sont cintrés en direction de la face ouverte (3) du profil métallique (2).

4. Piquet de tête (1) selon la revendication 1, **caractérisé en ce que** les extrémités libres des tiges (6) sont cintrées de 80° à 100° pour former les crochets (7) (6), de préférence de 90°.

5. Piquet de tête (1) selon la revendication 1, **caractérisé en ce que** les tiges sont reliées au profil métallique (2) par une liaison par soudage.

6. Piquet de tête (1) selon la revendication 1, **caractérisé en ce que** les tiges (6) sont des tiges rondes.

7. Piquet de tête (1) selon la revendication 1, **caractérisé en ce que** des tirants (8) sont soudés dans la section inférieure du piquet de tête.
